# EUROPÄISCHE PATENTSCHRIFT

(11) **EP 4 017 752 B1**
(45) Veröffentlichungstag und Bekanntmachung des Hinweises auf die Patenterteilung: **11.06.2025**
(21) Anmeldenummer: 20757860.0
(22) Anmeldetag: 13.08.2020
(51) Int. Cl.: G06Q 50/40, B60K 35/10, B60K 35/28

(54) **VERFAHREN ZUM BEREITSTELLEN EINER INDIVIDUELLEN NUTZERFÜHRUNG FÜR ZUMINDEST EINE FUNKTIONSKOMPONENTE EINES KRAFTFAHRZEUGS FÜR EINEN NUTZER IN DEM KRAFTFAHRZEUG, SOWIE ELEKTRONISCHES NUTZERFÜHRUNGSSYSTEM**
METHOD FOR PROVIDING AN INDIVIDUAL USER NAVIGATION FOR AT LEAST ONE FUNCTIONAL COMPONENT OF A MOTOR VEHICLE FOR A USER IN THE MOTOR VEHICLE, AND ELECTRONIC USER NAVIGATION SYSTEM
PROCÉDÉ DE FOURNITURE D'UNE NAVIGATION D'UTILISATEUR INDIVIDUELLE POUR AU MOINS UN ÉLÉMENT FONCTIONNEL D'UN VÉHICULE AUTOMOBILE POUR UN UTILISATEUR DANS LE VÉHICULE AUTOMOBILE, ET SYSTÈME DE NAVIGATION D'UTILISATEUR ÉLECTRONIQUE

(30) Priorität: 20.08.2019 DE 102019212429
(43) Veröffentlichungstag der Anmeldung: 29.06.2022
(73) Patentinhaber: VOLKSWAGEN AKTIENGESELLSCHAFT, 38440 Wolfsburg (DE)
(72) Erfinder: KNIGGE, Natascha, 38102 Braunschweig (DE); BERLINECKE, Michael, 29378 Wittingen (DE); BENDEWALD, Lennart, 38442 Wolfsburg (DE)
(86) Internationale Anmeldenummer: PCT/EP2020/072702
(87) Internationale Veröffentlichungsnummer: WO 2021/032576

(56) Entgegenhaltungen:
- DE-U1- 202016 004 260
- US-A1- 2017 282 821
- US-A1- 2018 137 593
- US-A1- 2019 043 365
- US-A1- 2019 152 492

## Beschreibung

Die Erfindung betrifft ein Verfahren zum Bereitstellen einer individuellen Nutzerführung für zumindest eine Funktionskomponente eines führerlos fahrenden Kraftfahrzeugs gemäß dem Oberbegriff des Patentanspruchs 1.

Ein derartiges Verfahren ist aus der US 2017/0282821 A1 bekannt.

Des Weiteren betrifft die Erfindung ein elektronisches Nutzerführungssystem zur Nutzung einer Funktionskomponente durch einen Nutzer bei einer Beförderungsfahrt mit einem führerlos fahrenden Kraftfahrzeug.

In der gattungsbildenden US 2017/0282821 A1 ist ein Transportbeförderungssystem beschrieben, bei dem von einem Benutzer mittels eines Benutzergeräts eine Abholanforderung an eine Zentralstelle übermittelt wird. Die Zentralstelle verwaltet eine Flotte von autonom fahrenden Fahrzeugen und stellt abhängig von einem individuellen Benutzerprofil eines Benutzers dem Benutzer ein hiernach bestimmtes autonom fahrendes Fahrzeug für eine Beförderungsfahrt zur Verfügung. Das Benutzerprofil kann dabei abhängig von bereits vorgenommenen Beförderungsfahrten des Benutzers angepasst werden und in der Zentralstelle gespeichert werden. Weiterhin kann eine Buchung einer Beförderungsfahrt durch einen Benutzer mittels geeigneten elektronischen Endgeräten vorgenommen werdenn

Weiterhin ist in der DE 20 2016 004 260 U1 ein System zur Koordination mehrerer Fahrzeuge zur Beförderung beschrieben, vorzugsweise zur Personenbeförderung von Nutzern mit körperlichen Beeinträchtigungen. Hierzu wird eine Fahrzeugflotte mit unterschiedlich behindertengerecht ausgestatteten Fahrzeugen eingesetzt, bei der die Auswahl eines bereits fertig konfigurierten Fahrzeugs aus der Fahrzeugflotte je nach den Bedürfnissen des aktuell zu transportierenden Nutzers erfolgt.

Zudem ist aus der US 2018/137593 A1 ein Verfahren bekannt, bei dem verfügbare Fahrzeuge an potentielle Nutzer unter Zuhilfenahme einer zentralen Verwaltungseinheit vermittelt werden. Hierbei können den potentiellen Nutzer betreffende individuelle Charakteristiken und Vorlieben aus früheren Fahrten berücksichtigt werden, insbesondere demografische und persönliche Interesseninformationen des jeweiligen Nutzers wie bevorzugte Fahrtrouten oder bevorzugte Fahrtzeiten oder bestimmte persönliche Eigenschaften des Nutzers wie Alter, Geschlecht etc.

Schließlich offenbart die DE 101 40 097 B4 ein Verfahren zur Unterstützung eines Bedieners zumindest eines Geräts, insbesondere eines Fahrzeugs, beim Auffinden einer Position eines Bedienelements. Mit Hilfe eines Spracherkennungssystems werden akustische Signale im Nahbereich des Geräts auf eine Suchanfrage des Bedieners hinsichtlich eines aufzufindenden Bedienelements überwacht. Beim Erkennen einer solchen Suchanfrage wird durch das Spracherkennungssystem von einer Signalisierungssteuereinheit eine für die Bediener wahrnehmbare Signalisierung aktiviert, die dem Benutzer die Position des gesuchten Bedienelements anzeigt.

Aufgabe der vorliegenden Erfindung ist es, ein Verfahren und ein elektronisches Nutzerführungssystem bereitzustellen, mit welchen eine gebuchte beziehungsweise reservierte Beförderungsfahrt eines Kraftfahrzeugs für eine Person aus einer speziellen Personengruppe für diese Person angenehmer gestaltet wird und eine Benutzung des Kraftfahrzeugs erleichtert wird.

Diese Aufgabe wird durch ein Verfahren und ein elektronisches Nutzerführungssystem gemäß den unabhängigen Patentansprüchen gelöst. Sinnvolle Weiterbildungen ergeben sich aus den Unteransprüchen.

Der Gegenstand des Anspruchs 1 betrifft ein Verfahren zum Bereitstellen einer individuellen Nutzerführung für zumindest eine Funktionskomponente eines Kraftfahrzeugs für einen Nutzer in dem Kraftfahrzeug. Mit einer Verwaltungseinheit wird die individuelle Nutzerführung erzeugt und die erzeugte individuelle Nutzerführung wird durch eine Ausgabeeinheit des Kraftfahrzeugs dem Nutzer in dem Kraftfahrzeug ausgegeben. Durch den Nutzer wird eine elektronische Anfrage für eine Beförderungsfahrt mit dem führerlos fahrenden Kraftfahrzeug an die Verwaltungseinheit übermittelt, wobei zusätzlich zur elektronischen Anfrage ein vorgegebenes elektronisches Nutzerprofil des Nutzers der Verwaltungseinheit bereitgestellt wird. Mit der Verwaltungseinheit wird abhängig von dem elektronischen Nutzerprofil des Nutzers die individuelle Nutzerführung für die zumindest eine Funktionskomponente bei der Beförderungsfahrt mit dem führerlos fahrenden Kraftfahrzeug erzeugt und bereitgestellt. Durch die vorgeschlagene Erfindung können insbesondere den unterschiedlichsten Nutzergruppen passende und individuell auf die jeweilige Nutzergruppe oder auf einen jeweiligen Nutzer der Beförderungsfahrt zugeschnittene Nutzerführungen bereitgestellt werden. Dadurch kann insbesondere die Beförderungsfahrt des Kraftfahrzeugs für den einzelnen Nutzer angenehmer gestaltet werden. Insbesondere ergibt sich durch die erzeugte individuelle Nutzerführung eine einfachere und überschaubarere Bedienung von Funktionskomponenten des Kraftfahrzeugs während einer durchgeführten Beförderungsfahrt mit dem Kraftfahrzeug. Durch die erzeugte individuelle Nutzerführung können die unterschiedlichsten Nutzergruppen beziehungsweise Personengruppen bei der Durchführung einer Beförderungsfahrt unterstützt werden. Hierzu ist in dem elektronischen Nutzerprofil des Nutzers zumindest eine körperlich bedingte Nutzungseinschränkung des Nutzers und/oder zumindest eine geistig bedingte Nutzungseinschränkung des Nutzers für die zumindest eine Funktionskomponente des Kraftfahrzeugs gespeichert. Diese zumindest eine körperlich bedingte Nutzungseinschränkung des Nutzers und/oder die zumindest eine geistig bedingte Nutzungseinschränkung des Nutzers wird durch die Verwaltungseinheit bei der Erzeugung der auf die körperlich bedingte Nutzungseinschränkung des Nutzers und/oder bei der Erzeugung der auf die geistig bedingte Nutzungseinschränkung des Nutzers zugeschnittenen individuellen Nutzerführung für die zumindest eine Funktionskomponente berücksichtigt.

Beispielsweise kann die individuelle Nutzerführung an den jeweiligen Nutzer der bevorstehenden Beförderungsfahrt des Kraftfahrzeugs angepasst werden. Dem Nutzer können zum Beispiel die unterschiedlichsten Schritte beziehungsweise Anweisungen für die Nutzung der Funktionskomponente bei der Beförderungsfahrt vor der Beförderungsfahrt und/oder während der bevorstehenden Beförderungsfahrt detailliert dargestellt werden. Insbesondere kann die individuelle Nutzerführung für den Nutzer so angepasst werden, dass der Nutzer nicht während der Beförderungsfahrt mit Hinweisen und/oder Informationen überfrachtet wird. Die individuelle Nutzerführung ist auf die persönlichen Bedürfnisse des Nutzers angepasst. Dazu ist das elektronische Nutzerprofil eine wesentliche Eingangsgröße. Bei der Erzeugung der individuellen Nutzerführung können personenspezifische Bedürfnisse des Nutzers berücksichtigt werden. Insbesondere kann mit der erzeugten individuellen Nutzerführung ein Nutzungsbedürfnis des Nutzers für die Funktionskomponente bei der Beförderungsfahrt verbessert bereitgestellt werden.

Das Übermitteln der elektronischen Anfrage erfolgt vor der Beförderungsfahrt. Das Bereitstellen des elektronischen Nutzerprofils kann vor und/oder während der Beförderungsfahrt erfolgen.

Bei dem Kraftfahrzeug handelt es sich um ein führerlos fahrendes Kraftfahrzeug, welches ohne einen Fahrzeuglenker beziehungsweise Fahrzeugführer die bevorstehende Beförderungsfahrt durchführt. Das Kraftfahrzeug kann insbesondere als vollautonom fahrendes Kraftfahrzeug ausgestaltet sein. Es kann auch als teilautonom fahrendes Kraftfahrzeug ausgestaltet sein. Insbesondere wird das führerlos fahrende Kraftfahrzeug mit einem Autonomielevel 5 betrieben.

Die Verwaltungseinheit, welche als externe Einheit oder als Backend oder als cloudbasiertes System ausgebildet ist, kann die individuelle Nutzerführung für zumindest eine Funktionskomponente des Kraftfahrzeugs für den Nutzer in dem Kraftfahrzeug erzeugen. Die Verwaltungseinheit ist insbesondere mit einer Software implementiert, mit welcher die individuelle Nutzerführung generiert werden kann.

Das Kraftfahrzeug ist insbesondere mit der Ausgabeeinheit ausgestattet, mit welcher die individuell erzeugte Nutzerführung dem Nutzer in dem Kraftfahrzeug visuell und/oder akustisch ausgegeben werden kann. Bei der Ausgabeeinheit des Kraftfahrzeugs handelt es sich beispielsweise um eine optische Anzeigeeinheit, wie beispielsweise einen Bildschirm und/oder um ein Lautsprechersystem des Kraftfahrzeugs. Beispielsweise kann die Ausgabeeinheit in einem Infotainmentsystem des Kraftfahrzeugs oder in einem Fahrzeugführungssystem integriert sein.

Insbesondere wird die elektronische Anfrage für die bevorstehende Beförderungsfahrt an die Verwaltungseinheit übermittelt, wobei zusätzlich zu der elektronischen Anfrage das vorgegebene elektronische Nutzerprofil des Nutzers ebenso der Verwaltungseinheit bereitgestellt wird. Die elektronische Anfrage kann beispielsweise mit dem zum Nutzer zugehörigen elektronischen Nutzerprofil verknüpft werden, wodurch bei Aktivierung der elektronischen Anfrage das dazugehörige elektronische Nutzerprofil automatisch an die Verwaltungseinheit übermittelt wird. Insbesondere erfolgt die Übermittlung der elektronischen Anfrage und des elektronischen Nutzerprofils über eine kommunikationstechnische Verbindung. Beispielsweise kann eine Bluetooth-Verbindung oder einer WLAN-Verbindung verwendet werden.

Mit der individuellen Nutzerführung kann insbesondere eine Anweisung, Bedienungsanweisung, Hilfestellung, Bedienungsanleitung, eine Information über die Beförderungsfahrt oder eine Maßnahme für die zumindest eine Funktionskomponente des Kraftfahrzeugs vor und/oder während der Beförderungsfahrt bereitgestellt werden.

Bei der Funktionskomponente kann es sich beispielsweise um eine Einheit oder um ein System des Kraftfahrzeugs handeln, mit welcher eine bestimmte Funktion der Einheit oder des Systems aktiviert und oder angewendet werden kann. Beispielsweise kann es sich um einen Haltegurt, ein Soundsystem, ein Navigationssystem, eine Türverriegelungseinheit und/oder Türentriegelungseinheit, ein Bedienungselement des Kraftfahrzeugs und/oder um eine Funktionstaste beziehungsweise Bedienelement in dem Kraftfahrzeug handeln. Es kann sich auch um einen Fahrzeugsitz handeln.

In einer vorteilhaften Ausführungsform der Erfindung ist vorgesehen, dass die elektronische Anfrage mit einem tragbaren Kommunikationsendgerät des Nutzers und/oder mit einer elektronischen Datenverarbeitungsanlage und/oder über ein Online-Portal erzeugt und an die Verwaltungseinheit übermittelt wird. Mit Hilfe der elektronischen Anfrage kann insbesondere der Nutzer vor der eigentlich durchzuführenden Beförderungsfahrt die bevorstehende Beförderungsfahrt rechtzeitig beziehungsweise frühzeitig reservieren beziehungsweise buchen. Insbesondere kann der Nutzer über die diversen elektronischen Systeme die elektronische Anfrage erzeugen und an die Verwaltungseinheit übermitteln.

Bei dem tragbaren Kommunikationsendgerät des Nutzers kann es sich beispielsweise um ein Smartphone oder um ein Tablet handeln. Dadurch kann der Nutzer die elektronische Anfrage von jedem beliebigen Ort mit Hilfe des tragbaren Kommunikationsendgeräts durchführen und an die Verwaltungseinheit übermitteln. Ebenso denkbar ist, dass mit Hilfe der elektronischen Datenverarbeitungsanlage wie beispielsweise einem Computer oder über ein Online-Portal wie beispielsweise eine Online Plattform die elektronische Anfrage durch den Nutzer erzeugt und an die Verwaltungseinheit übermittelt wird.

Die elektronische Anfrage des Nutzers kann durch ein akustische Signal, beispielsweise ein Sprachsignal des Nutzers und/oder durch ein schriftliches Textsignal, beispielsweise durch Eingabe in eine Eingabeeinheit erstellt werden.

Es kann vorgesehen sein, dass die erzeugte individuelle Nutzerführung mit der Ausgabeeinheit dem Nutzer akustisch und/oder visuell und/oder haptisch und/oder interaktiv ausgegeben wird. Durch die Vielzahl an unterschiedlichen Ausgabeformen kann die erzeugte individuelle Nutzerführung an die jeweiligen Bedürfnisse einer Nutzergruppe beziehungsweise Personengruppe angepasst werden. Insbesondere können hierbei personenspezifische Gegebenheiten des Nutzers bei der Erzeugung der individuellen Nutzerführung berücksichtigt werden, sodass die passende Ausgabeform bereitgestellt werden kann und mit der Ausgabeeinheit des Kraftfahrzeugs dem Nutzer in einem Kraftfahrzeug vorteilhaft ausgegeben werden kann.

Beispielsweise kann die individuell erzeugte Nutzerführung über einen Lautsprecher der Ausgabeeinheit dem Nutzer akustisch ausgegeben werden oder über einen Bildschirm der Ausgabeeinheit dem Nutzer visuell im Kraftfahrzeug angezeigt werden. Insbesondere kann mit Hilfe einer Spracherkennungseinheit und des Bildschirms und des Lautsprechers der Ausgabeeinheit eine interaktive individuelle Nutzerführung dem Nutzer in dem Kraftfahrzeug bei der bevorstehenden Beförderungsfahrt mit dem führerlos fahrenden Kraftfahrzeug angeboten werden. Ebenso ist es denkbar, dass dem Nutzer durch haptische Informationen mit der Ausgabeeinheit die erzeugten individuellen Nutzerführungen bereitgestellt werden. Beispielsweise können die haptischen Informationen über die individuelle Nutzerführung dem Nutzer über eine definierte Vibration in einem Fahrzeugsitz oder an einem jeweiligen Fahrzeugelement ausgegeben werden.

Vorzugsweise ist vorgesehen, dass durch die Verwaltungseinheit abhängig von zumindest dem elektronischen Nutzerprofil bestimmt wird, für welche zumindest eine Funktionskomponente des Kraftfahrzeugs zumindest eine individuelle Nutzerführung erzeugt wird. Dadurch kann eine besonders bedarfsgerechte und auf den individuellen Nutzer angepasste Nutzerführung erzeugt werden. Denn somit wird durch das System entschieden, für welche Funktionskomponente und/oder welche Funktionskomponenten der Nutzer eine individuelle Nutzerführung benötigt und/oder erhält. Da unterschiedliche Nutzungseinschränkungen von Nutzer unterschiedliche individuelle Nutzerführungen erfordern, ist dies bevorzugte Ausführung sehr vorteilhaft. Denn so ist es für den Nutzer nur erforderlich, seine Nutzungseinschränkung in dem Nutzerprofil anzugeben. Es ist dann nicht erforderlich auch anzugeben, für welche Funktionskomponenten der Nutzer eine individuelle Nutzerführung möchte. Dies kann zwar auch vorgesehen sein. Aber grundsätzlich ist dem System und somit der Verwaltungseinheit bekannt, welche Funktionskomponenten das Kraftfahrzeug hat und für welche eine individuelle Nutzerführung erstellt werden kann und/oder in der Verwaltungseinheit schon pauschal abgespeichert ist. Damit ist es verbessert möglich, dass dem Nutzer für seine Bedürfnisse und abhängig von der individuellen Ausgestaltung des Kraftfahrzeugs mit Funktionskomponenten eine maßgeschneiderte Nutzungsunterstützung zukommen zu lassen. Da unterschiedliche Nutzungseinschränkungen von Nutzern zu unterschiedlichen Verhaltensweisen beim Zustieg zum Kraftfahrzeug und/oder im Kraftfahrzeug führen und somit eine mehr oder weniger sichere Verhaltensweise auftritt, kann dadurch auch ermöglicht werden, dass die oben genannte vorteilhafte Ausführung auch eine geführtere und abgestimmtere Handlungs- und/oder Verhaltensabfolge des Nutzers vor und während der Beförderungsfahrt erfolgt. Auch dadurch wird ein erhöhtes Sicherheitsgefühl, Vertrauensgefühl und angenehmeres Reisegefühl beim Nutzer erzeugt.

Die individuelle Nutzerführung kann auch individuell durch die Verwaltungseinheit erzeugt werden. Dies bedeutet, dass eine für die Situation bestmögliche, schon vorhandene und abgespeicherte individuelle Nutzerführung ausgewählt wird oder, dass eine individuelle Nutzerführung neu erstellt wird.

Dazu kann zusätzlich oder anstatt dazu ebenso vorgesehen sein, dass durch die Verwaltungseinheit abhängig von zumindest dem elektronischen Nutzerprofil bestimmt wird, zu welchem Zeitpunkt der Beförderungsfahrt eine Ausgabe der individuellen Nutzerführung an den Nutzer erfolgt. Damit kann abgestimmt auf die jeweilige tatsächliche Handlung oder einem unmittelbar bevorstehenden Handlungsbedarf des Nutzers eine aktuelle, individuelle Nutzerführung erfolgen. Beispielsweise kann dies abhängig von bisherigen, bei der Beförderungsfahrt genutzten Funktionskomponenten und/oder von Umgebungsbedingungen des Kraftfahrzeugs erfolgen.

Beispielsweise kann bei einer während der Beförderungsfahrt auftreten Sonneneinstrahlung in das Kraftfahrzeug dem Nutzer ausgegeben werden, wie er die Sonnenschutzelemente an den Fahrzeugfenstern aktivieren und/oder betätigen kann. Insbesondere wenn eine Nutzungseinschränkung des Nutzers eine Sehbehinderung oder eine geistige Behinderung ist. Ebenso kann bei einem auftretenden Regen dem Nutzer ausgegeben werden, wie er ein geöffnetes Fahrzeugfenster schließt. Insbesondere können hier Bedienelemente gezeigt werden. Auch die Bedienung einer Klimaanlage kann entsprechend durch ein individuelle Nutzerführung unterstützt werden.

Allgemein können Komfort-Funktionskomponenten durch eine individuelle Nutzungsführung unterstützt werden. Komfort-Funktionskomponenten sind derartige im Kraftfahrzeug, die eine angenehme Beförderung für den Nutzer ermöglichen. Dies sind insbesondere ein Fahrzeugsitz, eine Klimaanlage, ein Sonnenschutzrollo, ein Infotainmentsystem etc.

Beispielsweise kann die Ausgabe der individuellen Nutzerführung automatisch beim Einstieg des Nutzers in das Kraftahrzeug erfolgen. Beispielsweise dann, wenn eine Nutzungsbeeinträchtigung des Nutzers erfordert, in individuell über ein Einstiegsszenario zu informieren und/oder Ratschläge zu geben. Beispielsweise bei Geh- oder Sehbehinderten Passagieren kann bereits beim Einstieg ein entsprechendes Erfordernis gegeben sein.

Des Weiteren kann zusätzlich oder anstatt dazu vorgesehen sein, dass durch die Verwaltungseinheit abhängig von zumindest dem elektronischen Nutzerprofil bestimmt wird, in welchem Umfang eine individuelle Nutzerführung an den Nutzer ausgegeben wird. So kann abhängig von der Funktionskomponente, in deren Nutzung der Nutzer unterstützt werden soll, ein umfänglicheres Szenario oder ein wenig umfänglicheres Szenario ausgegeben werden. Insbesondere kann dies auch abhängig von der Art und/oder dem Grad der Nutzungseinschränkung des Nutzers und/oder von der bisherigen Nutzungsunterstützung des Nutzers bei der Beförderungsfahrt erfolgen.

Es kann auch vorgesehen sein, dass anhand von dem elektronischen Nutzerprofil eine Prioritätsliste für eine, insbesondere zeitlich, gestaffelte Ausgabe von individuellen Nutzerführungen für mehrere Funktionskomponenten durchgeführt wird. Damit wird eine Informationsüberfrachtung des Nutzers vermieden und den erwarteten Handlungsabläufen entsprechend wird die Priorisierte Ausgabe der elektronischen Nutzerunterstützung vorgenommen. Ein besonders angenehmes Unterstützungsmuster für den Nutzer ist dadurch erreicht. Er fühlt sich auch hiermit stets durch das System "begleitet".

Erfindungsgemäß ist vorgesehen, dass in dem elektronischen Nutzerprofil des Nutzers zumindest ein Charakteristikum des Nutzers als körperlich bedingte Nutzungseinschränkung des Nutzers und/oder zumindest eine zumindest ein Charakteristikum des Nutzers als geistig bedingte Nutzungseinschränkung des Nutzers für die zumindest eine Funktionskomponente des Kraftfahrzeugs definiert ist. Durch die Berücksichtigung des zumindest einen Charakteristikums des Nutzers kann die individuelle Nutzerführung für die zumindest eine Funktionskomponente des Kraftfahrzeugs an diese Personengruppen beziehungsweise Nutzergruppen angepasst werden. Insbesondere handelt es sich bei dem zumindest einen Charakteristikum um eine körperliche Einschränkung des Nutzers und/oder um eine geistige Einschränkung des Nutzers hinsichtlich einer Nutzung der zumindest einen Funktionskomponente des Kraftfahrzeugs.

Insbesondere kann mit dem zumindest einen Charakteristikum als körperliche Einschränkung eine körperliche Behinderung des Nutzers geschildert werden. Dabei kann der Nutzer durch eine Schädigung des Stütz- und Bewegungsapparates in der Bedienung der zumindest einen Funktionskomponente eingeschränkt sein.

Ebenso kann mit dem zumindest einen Charakteristikum als körperliche Einschränkung eine Sinnesbehinderung des Nutzers dargestellt werden. Hierbei kann der Nutzer durch Blindheit oder Gehörlosigkeit oder Taubheit oder Schwerhörigkeit oder Taubblindheit in der Nutzung der zumindest einen Funktionskomponente beeinträchtigt sein.

Des Weiteren kann mit dem zumindest einen Charakteristikum als körperliche Einschränkung eine Sprachbehinderung oder eine geistige Behinderung des Nutzers repräsentiert werden.

Beispielsweise kann es sich bei dem Charakteristikum als körperliche Einschränkung auch um eine altersbedingte Einschränkung oder um eine temporäre körperliche Einschränkung, wie zum Beispiel eine Fraktur oder einen Knochenbruch handeln. Ebenso kann mit dem zumindest einen Charakteristikum eine körperliche Fehlbildung von beispielsweise Gliedmaßen des Nutzers definiert sein.

Insbesondere kann es sich bei dem zumindest einen Charakteristikum als körperliche Einschränkung um eine Schädigung insbesondere eine Bewegungsstörung des Nutzers handeln.

Insbesondere wird in dem elektronischen Nutzerprofil des Nutzers das zumindest eine Charakteristikum gespeichert, sodass es durch die Verwaltungseinheit bei der Erzeugung der individuellen Nutzerführung berücksichtigt werden kann. Dadurch kann dem Nutzer eine auf die Nutzungseinschränkung des Nutzers zugeschnittene individuelle Nutzerführung für die zumindest eine Funktionskomponente des Kraftfahrzeugs bereitgestellt werden. Dadurch können insbesondere Menschen mit körperlichen Beeinträchtigungen eine individuelle Mobilität insbesondere mit der Beförderungsfahrt mit dem führerlos fahrenden Kraftfahrzeug ermöglicht werden.

In einer weiteren vorteilhaften Ausgestaltung der Erfindung ist vorgesehen, dass mit der von dem zumindest einen Charakteristikum abhängig erzeugten individuellen Nutzerführung dem Nutzer zumindest eine Bedienungshilfe einer Funktionskomponente mit der Ausgabeeinheit ausgegeben wird, wobei mit der zumindest einen ausgegebenen Bedienungshilfe die Funktionskomponente durch den Nutzer gesteuert und/oder aktiviert wird. Durch die Berücksichtigung des zumindest einen Charakteristikums des Nutzers bei der Erzeugung der individuellen Nutzerführung kann der Nutzer die Funktionskomponente einfach und bedienerfreundlich steuern und/oder aktivieren. Insbesondere wird mit der erzeugten individuellen Nutzerführung dem Nutzer zumindest die eine Bedienungshilfe der Funktionskomponente mit der Ausgabeeinheit akustisch und/oder visuell ausgegeben. Beispielsweise kann es sich bei der Funktionskomponente des Kraftfahrzeugs um ein Infotainmentsystem oder um ein Betätigungselement des Kraftfahrzeugs handeln. Durch die erzeugte individuelle Nutzerführung kann dem Nutzer mit Hilfe der Bedienungshilfe eine Schritt-für-Schritt-Anleitung beziehungsweise Bedienung der Funktionskomponente ausgegeben werden. Dadurch kann der Nutzer trotz einer körperlichen Beeinträchtigung und/oder geistigen Beeinträchtigung die zumindest eine Funktionskomponente steuern und/oder aktivieren. Er kann sie somit auch umfänglich nutzen. Ebenso erfolgt diese Nutzung dann auch sicher für den Nutzer.

Beispielsweise kann durch Bedienungshilfe einem Nutzer mit einer Sehbehinderung eine detaillierte Beschreibung für die zumindest eine Funktionskomponente akustisch ausgegeben werden. Beispielsweise kann diesem Nutzer eine Beschreibung zum Anlegen eines Sicherheitsgurtes des Kraftfahrzeugs akustisch ausgegeben werden.

In einer weiteren vorteilhaften Ausgestaltung der Erfindung ist vorgesehen, dass mit der von dem zumindest einen Charakteristikum abhängig erzeugten individuellen Nutzerführung dem Nutzer über die Ausgabeeinheit zumindest eine Anweisung ausgegeben wird, wobei die Beförderungsfahrt mit dem Kraftfahrzeug erst dann gestartet wird, wenn die zumindest eine ausgegebene Anweisung vor einem Start der Beförderungsfahrt durch den Nutzer ausgeführt wird. Dadurch kann erreicht werden, dass insbesondere die Beförderungsfahrt erst dann gestartet werden kann, wenn der Nutzer die speziellen Anweisungen durchgeführt hat. Dadurch kann erreicht werden, dass zu einem der Nutzer für die Beförderungsfahrt bereit ist und alle notwendigen Komponenten des Kraftfahrzeugs für die bevorstehende Beförderungsfahrt bereitgestellt worden sind. Insbesondere kann dadurch eine sichere Beförderungsfahrt des Nutzers, welcher eine körperliche Beeinträchtigung aufweist, erhöht werden. Dadurch kann die Beförderungsfahrt für einen Nutzer mit körperlicher Beeinträchtigung angenehmer und sicherer durchgeführt werden.

Beispielsweise kann durch die erzeugte individuelle Nutzerführung dem Nutzer als Anweisung eine Anweisung zum Anschnallen mit einem Haltegurt des Kraftfahrzeugs ausgegeben werden. Ebenso kann dem Nutzer eine Anweisung für ein zu betätigendes Betätigungselement eines Fahrzeugsystems des Kraftfahrzeugs ausgegeben werden. Insbesondere werden die zumindest eine Anweisung dem Nutzer über die Ausgabeeinheit visuell und/oder akustisch mit Hilfe der Ausgabeeinheit im Kraftfahrzeug ausgegeben. Insbesondere wird bei einem Nutzer mit einer Gehörlosigkeit die Anweisung über einen Bildschirm des Kraftfahrzeugs optisch ausgegeben. Bei einem Nutzer mit einer Sehbehinderung kann die Anweisung dem Nutzer über zumindest einen Lautsprecher des Kraftfahrzeugs akustisch ausgegeben werden.

Vorzugsweise ist vorgesehen, dass mit der von dem zumindest einen Charakteristikum abhängig erzeugten individuellen Nutzerführung dem Nutzer über die Ausgabeeinheit zumindest ein Hinweis über eine Position einer Funktionskomponente ausgegeben wird, insbesondere wird die Funktionskomponente anhand des Hinweises durch den Nutzer lokalisiert. Insbesondere wenn der Nutzer sehbehindert ist. Dadurch kann insbesondere einem Nutzer mit einer Sehbehinderung als Charakteristikum ein akustischer Hinweis ausgegeben werden, sodass der Nutzer eine bestimmte Funktionskomponente in einem Innenraum des Kraftfahrzeugs auffinden kann. Dadurch kann ein Nutzer, trotz einer Sehbehinderung, eine Funktionskomponente im Innenraum des Kraftfahrzeugs auffinden beziehungsweise lokalisieren und die Funktionskomponente steuern und/oder aktivieren und somit nutzen.

Beispielsweise kann bei einer Beförderungsfahrt mit dem führerlos fahrenden Kraftfahrzeug dem Nutzer beim Einstieg in das Kraftfahrzeug ein akustischer und/oder haptischer Hinweis über einen freien Sitzplatz im Innenraum des Kraftfahrzeugs ausgegeben werden. Ebenso kann mit Hilfe einer Sprachausgabe der Ausgabeeinheit dem Nutzer die genaue Position eines freien Sitzplatzes im Innenraum des Kraftfahrzeugs ausgegeben werden. Beispielsweise kann mit Hilfe des ausgegebenen Hinweises eine Position des tragbaren Kommunikationsendgeräts des Nutzers im Kraftfahrzeug ausgegeben werden. Ebenso können dem Nutzer die Positionen eines Türgriffes, eines Haltegurts, eines Not-Aus-Knopfes, eines Knopfs für Beendigung der Beförderungsfahrt oder einer Sitzlehne mit Hilfe der Ausgabeeinheit insbesondere akustisch ausgegeben werden. Dadurch kann der Nutzer, welcher insbesondere eine Sehbehinderung aufweist, eine verbesserte und nutzerfreundliche Beförderungsfahrt des führerlos fahrenden Kraftfahrzeugs bereitgestellt werden.

Beispielsweise kann über eine Sprachausgabe oder über eine Sprachsteuerung der Befehl für das Starten der Beförderungsfahrt durch den Nutzer durchgeführt werden. Ebenso kann mit der Ausgabeeinheit dem Nutzer ein digitaler Assistent im proaktiven Dialog ausgegeben werden, wodurch der Nutzer gefragt wird, ob eine Beförderungsfahrt nun gestartet werden soll beziehungsweise kann. Beispielsweise kann mit Hilfe einer akustischen Ausgabe des zumindest einen Hinweises dem Nutzer die Position des Startknopfs für die Beförderungsfahrt ausgegeben werden.

In einer weiteren vorteilhaften Ausgestaltung der Erfindung ist vorgesehen, dass mit der von dem zumindest einen Charakteristikum erzeugten individuellen Nutzerführung dem Nutzer über die Ausgabeeinheit zumindest eine Information über eine aktuell durchgeführte Beförderungsfahrt mit dem Kraftfahrzeug ausgegeben wird, insbesondere wird mit der ausgegebenen zumindest einen Information dem Nutzer eine Routeninformation und/oder eine Fahrrichtung des Kraftfahrzeugs und/oder eine Ankunftszeit an dem Zielort bereitgestellt. Dadurch kann insbesondere dem Nutzer während der durchgeführten Beförderungsfahrt des Kraftfahrzeugs ein detaillierter Überblick über alle Gegebenheiten und Situationen während der Beförderungsfahrt ausgegeben werden. Dadurch ist insbesondere die Beförderungsfahrt für einen Nutzer mit einer körperlichen Beeinträchtigung angenehmer, da der Nutzer über beispielsweise kritische Situationen informiert werden kann. Insbesondere wird dadurch bei einem Nutzer mit beispielsweise einer Sehbehinderung eine Beförderungsfahrt akustisch beschrieben, sodass sich der Nutzer mit einer körperlichen Beeinträchtigung gedanklich ein Bild über die aktuell durchgeführte Beförderungsfahrt machen kann.

Beispielsweise kann je nach Art des Charakteristikums, welches in dem elektronischen Nutzerprofil gespeichert ist, die individuelle Nutzerführung erzeugt und dem Nutzer über die Ausgabeeinheit des Kraftfahrzeugs ausgegeben werden. Dabei kann insbesondere die Information über die aktuell durchgeführte Beförderungsfahrt des Kraftfahrzeugs dem Nutzer im Kraftfahrzeug ausgegeben werden. Beispielsweise können dem Nutzer mit Hilfe der Information eine präzise Angabe der aktuellen Fahrtrichtung des Kraftfahrzeugs insbesondere hinsichtlich des angestrebten Ziels ausgegeben werden. Beispielsweise kann dem Nutzer über die zumindest eine Information eine Angabe über eine Ausstiegsseite bei Ankunft am Zielort ausgegeben werden. Ebenso kann mit Hilfe einer akustischen Ausgabe mit der Ausgabeeinheit dem Nutzer die aktuelle Fahrzeit und/oder eine aktualisierte Fahrzeit dem Nutzer ausgegeben werden. Beispielsweise kann dem Nutzer ebenso eine Information bei Erreichen des Zielorts ausgegeben werden wie beispielsweise in welcher Fahrrichtung sich der Ausstieg des Kraftfahrzeugs befindet.

Vorzugsweise ist vorgesehen, dass bei einer aktuell durchgeführten Beförderungsfahrt des Nutzers dem Kraftfahrzeug ein aktuelles Verhalten des Nutzers mit einer Erfassungseinheit des Kraftfahrzeugs erfasst wird und das erfasste aktuelle Verhalten der Verwaltungseinheit übermittelt wird, sodass die individuelle Nutzerführung, insbesondere von zumindest einem, eine Nutzungseinschränkung definierenden Charakteristikum des Nutzers abhängig, an das aktuelle Verhalten des Nutzers angepasst wird. Dadurch kann insbesondere erreicht werden, dass dem Nutzer zu jedem Zeitpunkt die passende individuelle Nutzerführung der zumindest einen Funktionskomponente des Kraftfahrzeugs in dem Kraftfahrzeug bereitgestellt und ausgegeben werden kann. Dadurch kann die Beförderungsfahrt für den Nutzer angenehmer und sicherer durchgeführt werden. Die Nutzung ist dann noch bedarfsgerecht an den Nutzer anpassbar.

Beispielsweise kann es sich bei der Erfassungseinheit des Kraftfahrzeugs um eine Innenraumkamera des Kraftfahrzeugs handeln, mit welcher der Innenraum des Kraftfahrzeugs erfasst und aufgezeichnet werden kann. Ebenso kann es sich bei der Erfassungseinheit des Kraftfahrzeugs um ein Sensorsystem handeln. Insbesondere wird mit der Erfassungseinheit des Kraftfahrzeugs das aktuelle Verhalten des Nutzers erfasst und bei einer Veränderung des Verhaltens kann dies der Verwaltungseinheit übermittelt werden, sodass die individuelle Nutzerführung neu angepasst und dem Nutzer ausgegeben werden kann. Dadurch kann dem Nutzer eine ständig aktuelle individuelle Nutzerführung bereitgestellt werden.

Es kann auch vorgesehen sein, dass das aktuelle Verhalten mit dem individuellen Nutzerprofil verglichen wird. Abhängig davon kann die individuelle Nutzerführung erstellt und/oder angepasst werden.

Beispielsweise kann der Nutzer dahingehend überwacht werden, ob er eine Anweisung durchgeführt hat oder ob er die Anweisung noch nicht durchgeführt hat. Ebenso kann mit der Erfassungseinheit überprüft werden, ob der Nutzer beim Einstieg an einem freien Sitzplatz platzgenommen hat und, dass der Nutzer bei Beendigung der Beförderungsfahrt das Kraftfahrzeug wieder verlassen hat. Dadurch kann insbesondere erreicht werden, dass der Nutzer das Kraftfahrzeug nach Beendigung der Beförderungsfahrt sicher verlassen hat. Insbesondere kann mit der Erfassungseinheit des Kraftfahrzeugs überwacht werden, dass der Nutzer bei einer Lokalisierung einer Position einer Funktionskomponente die Hinweise erhält, dass er die Position der Funktionskomponente schnellstmöglich erreichen beziehungsweise auffinden kann.

Insbesondere kann mit der Verwaltungseinheit des Kraftfahrzeugs der Nutzer hinsichtlich seiner Nutzungseinschränkung überprüft werden, ob das gespeicherte Charakteristikum in dem elektronischen Nutzerprofil mit dem aktuellen Verhalten des Nutzers übereinstimmt. Beispielsweise kann bei Erfassung eines weiteren Charakteristikums des Nutzers dieses in dem elektronischen Nutzerprofil automatisch abgespeichert werden.

Ein weiterer Aspekt der Erfindung betrifft ein elektronisches Nutzerführungssystem zur Nutzung einer Funktionskomponente durch einen Nutzer bei einer Beförderungsfahrt mit einem führerlos fahrenden Kraftfahrzeug. Das elektronische Nutzerführungssystem weist eine Verwaltungseinheit auf. Das elektronische Nutzerführungssystem ist ausgebildet, um ein Verfahren nach dem vorher geschilderten Aspekt oder einer Ausgestaltung davon durchzuführen. Insbesondere wird das Verfahren mit dem elektronischen Nutzerführungssystem durchgeführt.

Ein weiterer Aspekt der Erfindung betrifft ein Kraftfahrzeug mit einem Nutzerführungssystem nach einem der vorher geschilderten Aspekten oder einer Ausführung davon.

Ein weiterer Aspekt der Erfindung betrifft ein Computerprogrammprodukt, umfassend Befehle, die bei der Ausführung des Programms durch einen Computer diesen veranlassen, das Verfahren nach einem der vorher geschilderten Aspekte oder einer Ausführung davon auszuführen.

Zu der Erfindung gehören auch Weiterbildungen des erfindungsgemäßen elektronischen Nutzerführungssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen elektronischen Nutzerführungssystems hier nicht noch einmal beschrieben.

Die Erfindung umfasst auch die Kombinationen der Merkmale der beschriebenen Ausführungsformen.

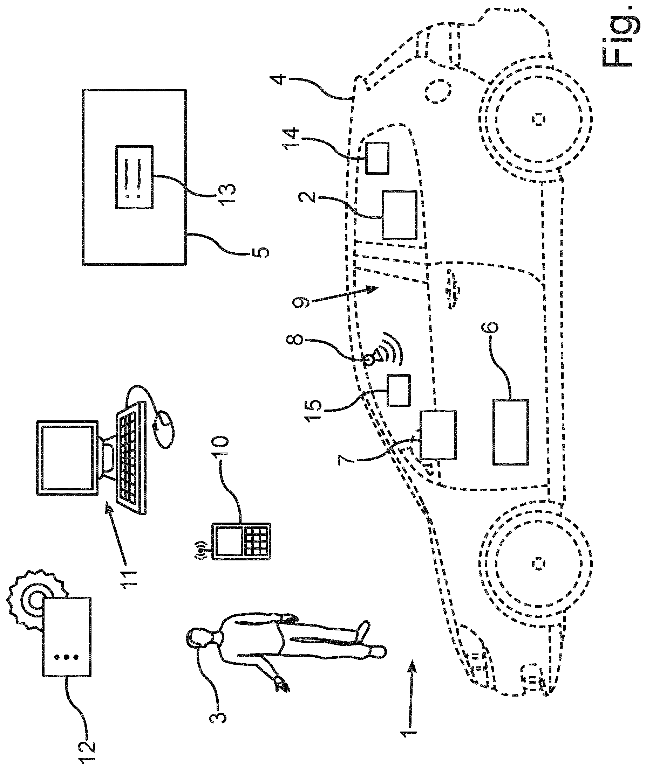

Im Folgenden ist ein Ausführungsbeispiel der Erfindung beschrieben. Hierzu zeigt die einzige Figur eine schematische Darstellung des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Fig. zeigt ein elektronisches Nutzerführungssystem 1 zur Nutzung zumindest einer Funktionskomponente 2 durch einen Nutzer 3 bei einer Beförderungsfahrt mit einem führerlos fahrenden Kraftfahrzeug 4. Das elektronische Nutzerführungssystem 1 weist insbesondere eine Verwaltungseinheit 5 auf. Bei der Verwaltungseinheit 5 kann es sich beispielsweise um eine externe Einheit oder um ein cloudbasiertes System handeln. Beispielsweise kann mit der Verwaltungseinheit 5 eine individuelle Nutzerführung für die zumindest eine Funktionskomponente 2 des Kraftfahrzeugs 4 für den Nutzer 3 in dem Kraftfahrzeug 4 bereitgestellt werden. Dabei wird die individuelle Nutzerführung durch die Verwaltungseinheit 5 erzeugt und über eine Ausgabeeinheit 6 des Kraftfahrzeugs 4 dem Nutzer 3 in dem Kraftfahrzeug 4 ausgegeben. Beispielsweise kann die Ausgabeeinheit 6 mit Hilfe eines Infotainmentsystems 7 des Kraftfahrzeugs 4 und/oder mit einem Lautsprecher 8 des Kraftfahrzeugs 4 die individuelle Nutzerführung ausgeben.

Insbesondere kann die erzeugte individuelle Nutzerführung mit der Ausgabeeinheit 6 dem Nutzer 3 akustisch und/oder visuell und/oder haptisch und/oder interaktiv ausgegeben werden. Insbesondere wird die individuelle Nutzerführung mit der Ausgabeeinheit 6 dem Nutzer 3 in einem Fahrzeuginnenraum 9 des Kraftfahrzeugs 4 ausgegeben.

Insbesondere wird durch den Nutzer 3 eine elektronische Anfrage für eine bevorstehende Beförderungsfahrt mit dem führerlos fahrenden Kraftfahrzeug 4 an die Verwaltungseinheit 5 übermittelt. Insbesondere kann die elektronische Anfrage über eine kommunikationstechnische Verbindung, insbesondere eine kabellose kommunikationstechnische Verbindung an die Verwaltungseinheit 5 übermittelt werden. Insbesondere kann die elektronische Anfrage mit einem tragbaren Kommunikationsendgerät 10 des Nutzers 3 und/oder mit einer elektronischen Datenverarbeitungsanlage 11 und/oder über ein Online-Portal 12 erzeugt und an die Verwaltungseinheit 5 übermittelt werden.

Bei dem tragbaren Kommunikationsendgerät 10 des Nutzers 3 kann es sich insbesondere um ein Smartphone oder um ein Tablet des Nutzers 3 handeln. Die elektronische Anfrage kann beispielsweise mit Hilfe der elektronischen Datenverarbeitungsanlage 11 wie beispielsweise einen Computer an die Verwaltungseinheit 5 übermittelt werden. Ebenso kann der Nutzer 3 mit Hilfe des tragbaren Kommunikationsendgeräts 10 und/oder mit der elektronischen Datenverarbeitungsanlage 11 über ein Online-Portal 12 oder über eine Online-Plattform die elektronische Anfrage durchführen und an die Verwaltungseinheit 5 übermitteln.

Zusätzlich wird bei der Übermittlung der elektronischen Anfrage ein vorgegebenes elektronisches Nutzerprofil 13 des Nutzers 3 der Verwaltungseinheit 5 übermittelt und somit bereitgestellt. In dem elektronischen Nutzerprofil 13 des Nutzers 3 wird zumindest ein Charakteristikum des Nutzers 3 definiert. Mit dem zumindest einen definierten Charakteristikum ist zumindest eine, insbesondere körperlich bedingte, Nutzungseinschränkung des Nutzers 3 definiert. Insbesondere für die zumindest eine Funktionskomponente 2 des Kraftfahrzeugs 4 definiert. Bei dem Charakteristikum handelt es sich insbesondere um eine körperliche Behinderung und/oder um eine Sinnesbehinderung und/oder um eine Sprachbehinderung etc. Diese unterschiedlichen Einschränkungen des Nutzers 3 können insbesondere in dem elektronischen Nutzerprofil 13 gespeichert werden. Insbesondere kann auch ein Schweregrad dieser körperlichen Einschränkung angepasst werden.

Beispielsweise kann mit der Verwaltungseinheit 5 des elektronischen Nutzerführungssystems 1 abhängig von dem elektronischen Nutzerprofil 13 des Nutzers 3 die individuelle Nutzerführung für die zumindest eine Funktionskomponente 2 bei der bevorstehenden Beförderungsfahrt mit dem führerlos fahrenden Kraftfahrzeug 4 erzeugt und bereitgestellt werden.

Insbesondere kann mit der individuellen Nutzerführung dem Nutzer 3 eine Bedienungsanleitung, eine Hilfestellung, eine Anweisung, eine Maßnahme oder ein Hinweis bereitgestellt werden.

Bei der Funktionskomponente 2 des Kraftfahrzeugs 4 handelt es sich beispielsweise um eine Fahrzeugkomponente oder ein Fahrzeugsystem oder ein Betätigungselement beziehungsweise einen Schalter in dem Kraftfahrzeug 4 oder einen Sicherheitsgurt 14 des Kraftfahrzeugs 4 oder einen Türgriff des Kraftfahrzeugs 4 oder einen Fahrzeugsitz etc. Diese Aufzählung ist nicht abschließend zu verstehen. Insbesondere kann die Funktionskomponente 2 als beliebige Einheit und/oder als beliebiges System des Kraftfahrzeugs 4 verstanden werden.

Bei dem Kraftfahrzeug 4 handelt es sich beispielsweise um ein vollautonom oder zumindest teilautonom betriebenes Fahrzeug. Insbesondere ist das Kraftfahrzeug 4 mit einem Autonomielevel 5 ausgestattet.

Insbesondere wird die Beförderungsfahrt ohne einen Fahrzeuglenker beziehungsweise Fahrzeugführer durch das führerlos fahrende Kraftfahrzeug 4 durchgeführt.

Insbesondere kann mit der elektronischen Anfrage auch eine Reservierung beziehungsweise eine Buchung der bevorstehenden Beförderungsfahrt des führerlos fahrenden Kraftfahrzeugs 4 durch den Nutzer 3 durchgeführt werden.

Beispielsweise kann die elektronische Anfrage über eine Software-Applikation auf dem tragbaren Kommunikationsendgerät 10 oder auf der elektronischen Datenverarbeitungsanlage 11 durch den Nutzer 3 durchgeführt werden. Ebenso kann mit Hilfe des tragbaren Kommunikationsendgeräts 10 oder der elektronischen Datenverarbeitungsanlage 11 das elektronische Nutzerprofil 13 erzeugt und aktualisiert werden.

Beispielsweise kann durch die Verwaltungseinheit 5 abhängig von zumindest dem elektronischen Nutzerprofil 13 bestimmt werden, für welche Funktionskomponente 2 des Kraftfahrzeugs 4 eine individuelle Nutzerführung erzeugt wird und/oder zu welchem Zeitpunkt der Beförderungsfahrt eine Ausgabe der individuellen Nutzerführung an den Nutzer 3 erfolgt und/oder in welchem Umfang eine individuelle Nutzerführung an den Nutzer 3 ausgegeben wird.

Das elektronische Nutzerführungssystem 1 und insbesondere die Verwaltungseinheit 5 erzeugen die individuelle Nutzerführung in Abhängigkeit des zumindest einen Charakteristikums, welches in dem elektronischen Nutzerprofil 13 definiert ist.

Beispielsweise kann mit der von dem zumindest einen Charakteristikum abhängig erzeugten individuellen Nutzerführung dem Nutzer 3 zumindest eine Bedienungshilfe einer Funktionskomponente 2 mit der Ausgabeeinheit 6 ausgegeben werden. Insbesondere kann der Nutzer 3 mit Hilfe der zumindest einen Bedienungshilfe die Funktionskomponente 2 steuern und/oder aktivieren.

In einem weiteren Beispiel kann mit der von dem zumindest einen Charakteristikum abhängig erzeugten individuellen Nutzerführung dem Nutzer 3 über die Ausgabeeinheit 6 zumindest eine Anweisung ausgegeben werden, wobei mit der ausgegebenen Anweisung eine Aktion durch den Nutzer 3 vor Start der Beförderungsfahrt des Kraftfahrzeugs 4 durchgeführt werden muss. Insbesondere kann die Beförderungsfahrt mit dem Kraftfahrzeug 4 erst dann gestartet werden, wenn die zumindest eine ausgegebene Anweisung vor dem Start der Beförderungsfahrt durch den Nutzer 3 ausgeführt wurde. Dabei können dem Nutzer 3 über die Ausgabeeinheit 6 insbesondere über den Lautsprecher 8 eine akustische Anweisung ausgegeben werden, dass der Nutzer sich vor Beginn der Beförderungsfahrt mit Hilfe des Sicherheitsgurts 14 beziehungsweise eines Rückhaltesystems des Kraftfahrzeugs 4 anschnallen muss.

Ebenso ist es denkbar, dass mit der von dem zumindest einen Charakteristikum abhängig erzeugten individuellen Nutzerführung dem Nutzer 3 über die Ausgabeeinheit 6 zumindest ein Hinweis über eine Position einer Funktionskomponente 2 ausgegeben wird. Insbesondere kann der Nutzer 3 mit Hilfe des ausgegebenen Hinweises die Funktionskomponente 2 in dem Fahrzeuginnenraum 9 des Kraftfahrzeugs 4 lokalisieren und auffinden. Dadurch kann insbesondere einem Nutzer 3 mit einer Sehbehinderung ein Hinweis über eine Position im Fahrzeuginnenraum 9 der gesuchten Funktionskomponente 2 bereitgestellt werden. Beispielweise kann beim Einsteigen des Nutzers 3 in das Kraftfahrzeug 4 dem Nutzer 3 über die Ausgabeeinheit 6 ein Hinweis über einen freien Sitzplatz im Fahrzeuginnenraum 9 des Kraftfahrzeugs 4 ausgegeben werden. Dadurch kann der Nutzer 3 einen freien Sitzplatz schnell auffinden und belegen.

Beispielsweise kann mit der von dem zumindest einen Charakteristikum abhängig erzeugten individuellen Nutzerführung dem Nutzer 3 über die Ausgabeeinheit 6 zumindest eine Information über eine aktuell durchgeführte Beförderungsfahrt mit dem Kraftfahrzeug 4 ausgegeben werden, insbesondere wird mit der ausgegebenen zumindest einen Information dem Nutzer 3 eine Routeninformation und/oder eine Fahrrichtung des Kraftfahrzeugs 4 und/oder eine Ankunftszeit an einem Zielort bereitgestellt. Insbesondere kann über den Lautsprecher 8 des Kraftfahrzeugs 4 dem Nutzer 3 während einer Beförderungsfahrt eine aktuelle Reisedauer und/oder eine zu erwartende Reisezeit ausgegeben werden.

Beispielsweise kann vor und/oder bei einer aktuell durchgeführten Beförderungsfahrt des Nutzers 3 mit dem Kraftfahrzeug 4 ein aktuelles Verhalten des Nutzers 3 mit zumindest einer Erfassungseinheit 15 des Kraftfahrzeugs 4 erfasst werden. Insbesondere kann das erfasste aktuelle Verhalten des Nutzers 3 der Verwaltungseinheit 5 übermittelt werden, sodass die individuelle Nutzerführung abhängig von dem aktuell erfassten Verhalten des Nutzers 3 angepasst werden kann. Die Erfassungseinheit 15 kann eine Kamera oder mehrere Kameras aufweisen. Beispielsweise kann der Nutzer 3 vor dem Zustieg zum Kraftfahrzeug 4 und/oder beim Zustieg zum Kraftfahrzeug 4 und/oder im Kraftfahrzeug 4 erfasst werden. Insbesondere kann beispielsweise das aktuell erfasste Verhalten des Nutzers 3 in das elektronische Nutzerprofil 13 abgespeichert werden. Durch die Nutzung der erfassten Information kann die individuelle Nutzerführung an vielfältige Situation noch verbessert angepasst und dem Nutzer 3 aktuell ausgegeben werden.

Insbesondere kann auch durch das erfasste aktuelle Verhalten des Nutzers 3 eine Interaktions-Routine für das elektronische Nutzerführungssystem 1 erlernt werden. Beispielsweise kann dies mit einer Maschinenlerneinheit des elektronischen Nutzerführungssystems 1 durchgeführt werden. Dadurch können beispielsweise Hinweise anhand der erlernten Interaktions-Routine reduziert werden, sodass der Nutzer 3 nicht durch eine Informationsüberfrachtung überlastet wird.

## Patentansprüche

1. Verfahren zum Bereitstellen einer individuellen Nutzerführung für zumindest eine Funktionskomponente (2) eines führerlos fahrenden Kraftfahrzeugs (4) für einen Nutzer (3) des Kraftfahrzeugs (4), wobei
- mit einer Verwaltungseinheit (5) die individuelle Nutzerführung erzeugt wird, und
- die erzeugte individuelle Nutzerführung durch eine Ausgabeeinheit (6) des Kraftfahrzeugs (4) dem Nutzer (3) in dem Kraftfahrzeug (4) ausgegeben wird,
- durch den Nutzer (3) eine elektronische Anfrage für eine Beförderungsfahrt mit dem führerlos fahrenden Kraftfahrzeug (4) an die Verwaltungseinheit (5) übermittelt wird,
- bei der elektronischen Anfrage ein vorgegebenes elektronisches Nutzerprofil (13) des Nutzers (3) der Verwaltungseinheit (5) übermittelt wird, und
- von der Verwaltungseinheit (5) abhängig von dem elektronischen Nutzerprofil (13) des Nutzers (3) die individuelle Nutzerführung für die zumindest eine Funktionskomponente (2) bei der Beförderungsfahrt mit dem führerlos fahrenden Kraftfahrzeug (4) erzeugt und bereitgestellt wird,
**dadurch gekennzeichnet,**
**dass** in dem elektronischen Nutzerprofil (13) des Nutzers (3) zumindest eine körperlich bedingte Nutzungseinschränkung des Nutzers (3) und/oder zumindest eine geistig bedingte Nutzungseinschränkung des Nutzers (3) für die zumindest eine Funktionskomponente (2) des Kraftfahrzeugs (4) gespeichert wird,
und **dass** die zumindest eine körperlich bedingte Nutzungseinschränkung des Nutzers (3) und/oder die zumindest eine geistig bedingte Nutzungseinschränkung des Nutzers (3) durch die Verwaltungseinheit (5) bei der Erzeugung der auf die körperlich bedingte Nutzungseinschränkung des Nutzers (3) und/oder bei der Erzeugung der auf die geistig bedingte Nutzungseinschränkung des Nutzers (3) zugeschnittenen individuellen Nutzerführung für die zumindest eine Funktionskomponente (2) berücksichtigt wird.

2. Verfahren nach Anspruch 1,
**dadurch gekennzeichnet, dass**
durch die Verwaltungseinheit bei der Erzeugung der auf die körperlich bedingte Nutzungseinschränkung des Nutzers (3) zugeschnittenen individuellen Nutzerführung für die zumindest eine Funktionskomponente (2) und/oder bei der Erzeugung der auf die geistig bedingte Nutzungseinschränkung des Nutzers (3) zugeschnittenen individuellen Nutzerführung für die zumindest eine Funktionskomponente (2) eine körperliche Behinderung des Nutzers (3) und/oder eine Sinnesbehinderung des Nutzers (3) und/oder eine Sprachbehinderung des Nutzers (3) und/oder eine geistige Behinderung des Nutzers (3) und/oder eine altersbedingte Einschränkung des Nutzers (3) und/oder eine temporäre körperliche Einschränkung des Nutzers (3) und/oder eine körperliche Fehlbildung von Gliedmaßen des Nutzers (3) und/oder einer Bewegungsstörung des Nutzers (3) berücksichtigt wird.

3. Verfahren nach Anspruch 1 oder 2,
**dadurch gekennzeichnet, dass**
mit der von der körperlich bedingten Nutzungseinschränkung des Nutzers (3) und/oder von der geistig bedingten Nutzungseinschränkung des Nutzers (3) abhängig erzeugten individuellen Nutzerführung dem Nutzer (3) zumindest eine Bedienungshilfe einer Funktionskomponente (14) mit der Ausgabeeinheit (6) ausgegeben wird, wobei mit der zumindest einen ausgegebenen Bedienungshilfe die Funktionskomponente (2) durch den Nutzer (3) gesteuert und/oder aktiviert werden kann.

4. Verfahren nach einem der vorhergehenden Ansprüche,
**dadurch gekennzeichnet, dass**
mit der von der körperlich bedingten Nutzungseinschränkung des Nutzers (3) und/oder von der geistig bedingten Nutzungseinschränkung des Nutzers (3) abhängig erzeugten individuellen Nutzerführung dem Nutzer (3) über die Ausgabeeinheit (6) zumindest eine Anweisung ausgegeben wird, wobei die Beförderungsfahrt mit dem Kraftfahrzeug (4) erst dann gestartet wird, wenn die zumindest eine ausgegebene Anweisung vor einem Start der Beförderungsfahrt durch den Nutzer (3) ausgeführt wird.

5. Verfahren nach einem der vorhergehenden Ansprüche,
**dadurch gekennzeichnet, dass**
mit der von der körperlich bedingten Nutzungseinschränkung des Nutzers (3) und/oder von der geistig bedingten Nutzungseinschränkung des Nutzers (3) abhängig erzeugten individuellen Nutzerführung dem Nutzer (3) über die Ausgabeeinheit (6) zumindest ein Hinweis über eine Position einer Funktionskomponente (2) ausgegeben wird, insbesondere wird die Funktionskomponente (2) anhand des Hinweises durch den Nutzer (3) lokalisiert.

6. Verfahren nach einem der vorhergehenden Ansprüche,
**dadurch gekennzeichnet, dass**
mit der von der körperlich bedingten Nutzungseinschränkung des Nutzers (3) und/oder von der geistig bedingten Nutzungseinschränkung des Nutzers (3) abhängig erzeugten individuellen Nutzerführung dem Nutzer (3) über die Ausgabeeinheit (6) zumindest eine Information über eine aktuell durchgeführte Beförderungsfahrt mit dem Kraftfahrzeug (4) ausgegeben, insbesondere wird mit der ausgegebenen zumindest einen Information dem Nutzer (3) eine Routeninformation und/oder eine Fahrrichtung des Kraftfahrzeugs (4) und/oder eine Ankunftszeit an einem Zielort bereitgestellt.

7. Verfahren nach einem der vorhergehenden Ansprüche,
**dadurch gekennzeichnet, dass**
bei einer aktuell durchgeführten Beförderungsfahrt des Nutzers (3) mit dem Kraftfahrzeug (4) ein aktuelles Verhalten des Nutzers (3) mit einer Erfassungseinheit (15) des Kraftfahrzeugs (4) erfasst wird und das erfasste aktuelle Verhalten der Verwaltungseinheit (5) übermittelt wird, sodass die individuelle Nutzerführung, insbesondere von zumindest einem, eine Nutzungseinschränkung definierenden Charakteristikum des Nutzers (3) abhängig, an das aktuelle Verhalten des Nutzers (3) angepasst wird.

8. Verfahren nach einem der vorhergehenden Ansprüche,
**dadurch gekennzeichnet, dass**
die elektronische Anfrage mit einem tragbaren Kommunikationsendgerät (10) des Nutzers (3) und/oder mit einer elektronischen Datenverarbeitungsanlage (11) und/oder über ein Online-Portal (12) erzeugt und an die Verwaltungseinheit (5) übermittelt wird

9. Verfahren nach einem der vorhergehenden Ansprüche,
**dadurch gekennzeichnet, dass**
durch die Verwaltungseinheit (5) abhängig von zumindest dem elektronischen Nutzerprofil (13) bestimmt wird, für welche Funktionskomponente (2) des Kraftfahrzeugs (4) eine individuelle Nutzerführung erzeugt wird.

10. Elektronisches Nutzerführungssystem (1) zur Nutzung einer Funktionskomponente (2) durch einen Nutzer (3) bei einer Beförderungsfahrt mit einem führerlos fahrenden Kraftfahrzeug (4), mit einer Verwaltungseinheit (5), wobei das elektronische Nutzerführungssystem (1) zum Durchführen eines Verfahrens nach einem der vergehenden Ansprüche ausgebildet ist.

## Claims

1. Method for providing individual user guidance for at least one functional component (2) of a driverless motor vehicle (4) for a user (3) of the motor vehicle (4),
- the individual user guidance being generated using an administrative unit (5), and
- the generated individual user guidance being issued to the user (3) in the motor vehicle (4) by an output unit (6) of the motor vehicle (4),
- the user (3) transmitting an electronic request to the administrative unit (5) for a transport journey with the driverless motor vehicle (4),
- upon the electronic request, a predefined electronic user profile (13) of the user (3) being transmitted to the administrative unit (5), and
- the administrative unit (5) generating and providing the individual user guidance for the at least one functional component (2) during the transport journey with the driverless motor vehicle (4) depending on the electronic user profile (13) of the user (3),
**characterized in that**
in the electronic user profile (13) of the user (3), at least one physically caused usage restriction of the user (3) and/or at least one mentally caused usage restriction of the user (3) is stored for the at least one functional component (2) of the motor vehicle (4), **and in that** the at least one physically caused usage restriction of the user (3) and/or the at least one mentally caused usage restriction of the user (3) is taken into account by the administrative unit (5) when generating the individual user guidance for the at least one functional component (2) tailored to the physically caused usage restriction of the user (3) and/or when generating the individual user guidance for the at least one functional component tailored to the mentally caused usage restriction of the user (3).

2. Method according to claim 1,
**characterized in that**
when generating the individual user guidance tailored to the physically caused usage restriction of the user (3) for the at least one functional component (2) and/or when generating the individual user guidance tailored to the mentally caused usage restriction of the user (3) for the at least one functional component (2), a physical disability of the user (3) and/or a sensory impairment of the user (3) and/or a speech impairment of the user (3) and/or a mental disability of the user (3) and/or an age-related restriction of the user (3) and/or a temporary physical restriction of the user (3) and/or a physical malformation of limbs of the user (3) and/or a movement disorder of the user (3) is taken into account by the administrative unit.

3. Method according to claim 1 or 2,
**characterized in that**
with the individual user guidance generated depending on the physically caused usage restriction of the user (3) and/or the mentally caused usage restriction of the user (3), at least one operating aid for a functional component (14) is issued to the user (3) using the output unit (6), the functional component (2) being controllable and/or able to be activated by the user (3) using the at least one issued operating aid.

4. Method according to any of the preceding claims,
**characterized in that**
with the individual user guidance generated depending on the physically caused usage restriction of the user (3) and/or the mentally caused usage restriction of the user (3), at least one instruction is issued to the user (3) via the output unit (6), the transport journey with the motor vehicle (4) only being started when the at least one issued instruction is carried out by the user (3) before the start of the transport journey.

5. Method according to any of the preceding claims,
**characterized in that**
with the individual user guidance generated depending on the physically caused usage restriction of the user (3) and/or the mentally caused usage restriction of the user (3), at least one indication about a position of a functional component (2) is issued to the user (3) via the output unit (6), in particular the functional component (2) is localized by the user (3) on the basis of the indication.

6. Method according to any of the preceding claims,
**characterized in that**
with the individual user guidance generated depending on the physically caused usage restriction of the user (3) and/or the mentally caused usage restriction of the user (3), at least one piece of information about a currently performed transport journey with the motor vehicle (4) is issued to the user (3) via the output unit (6), in particular route information and/or a direction of driving of the motor vehicle (4) and/or an arrival time at a destination is provided to the user (3) with the at least one piece of information issued.

7. Method according to any of the preceding claims,
**characterized in that**
during a currently performed transport journey of the user (3) with the motor vehicle (4), a current behavior of the user (3) is recorded with a recording unit (15) of the motor vehicle (4) and the recorded current behavior is transmitted to the administrative unit (5), so that the individual user guidance is adapted to the current behavior of the user (3), in particular depending on at least one characteristic of the user (3) defining a usage restriction.

8. Method according to any of the preceding claims,
**characterized in that**
the electronic request is generated using a portable communication terminal (10) of the user (3) and/or using an electronic data processing system (11) and/or via an online portal (12) and transmitted to the administrative unit (5)

9. Method according to any of the preceding claims,
**characterized in that**
the administrative unit (5) determines, depending on at least the electronic user profile (13), for which functional component (2) of the motor vehicle (4) an individual user guidance is generated.

10. Electronic user guidance system (1) for use of a functional component (2) by a user (3) during a transport journey with a driverless motor vehicle (4), with an administrative unit (5), wherein the electronic user guidance system (1) is designed to carry out a method according to any of the preceding claims.

## Revendications

1. Procédé permettant de mettre à disposition d'un utilisateur (3) d'un véhicule automobile (4) à conduite sans conducteur un guidage individuel de l'utilisateur pour au moins un composant fonctionnel (2) du véhicule automobile (4), dans lequel
- le guidage individuel de l'utilisateur est généré avec une unité de gestion (5), et
- le guidage individuel de l'utilisateur généré est délivré à l'utilisateur (3) dans le véhicule automobile (4) par une unité de sortie (6) du véhicule automobile (4),
- une demande électronique pour un trajet de transport avec le véhicule automobile à conduite sans conducteur (4) est transmise par l'utilisateur (3) à l'unité de gestion (5),
- lors de la demande électronique, un profil d'utilisateur électronique (13) prédéfini de l'utilisateur (3) est transmis à l'unité de gestion (5), et
- l'unité de gestion (5) génère et met à disposition, en fonction du profil d'utilisateur électronique (13) de l'utilisateur (3), le guidage individuel de l'utilisateur pour l'au moins un composant fonctionnel (2) lors du trajet de transport avec le véhicule automobile (4) à conduite sans conducteur,
**caractérisé en ce que,**
dans le profil d'utilisateur électronique (13) de l'utilisateur (3), au moins une restriction d'utilisation de l'utilisateur (3) liée à son état physique et/ou au moins une restriction d'utilisation de l'utilisateur (3) liée à son état mental est enregistrée pour l'au moins un composant fonctionnel (2) du véhicule automobile (4), et **en ce que** l'au moins une restriction d'utilisation de l'utilisateur (3) liée à son état physique et/ou l'au moins une restriction d'utilisation de l'utilisateur (3) liée à son état mental est prise en compte par l'unité de gestion (5) lors de la génération du guidage individuel de l'utilisateur adapté à la restriction d'utilisation de l'utilisateur (3) liée à son état physique et/ou lors de la génération du guidage individuel de l'utilisateur adapté à la restriction d'utilisation de l'utilisateur (3) liée à son état mental pour l'au moins un composant fonctionnel (2).

2. Procédé selon la revendication 1,
**caractérisé en ce que**
par l'unité de gestion, lors de la génération du guidage individuel de l'utilisateur adapté à la restriction d'utilisation de l'utilisateur (3) liée à son état physique pour l'au moins un composant fonctionnel (2) et/ou lors de la génération du guidage individuel de l'utilisateur adapté à la restriction d'utilisation de l'utilisateur (3) liée à son état mental pour l'au moins un composant fonctionnel (2), un handicap physique de l'utilisateur (3) et/ou un handicap sensoriel de l'utilisateur (3) et/ou un handicap linguistique de l'utilisateur (3) et/ou un handicap mental de l'utilisateur (3) et/ou une restriction liée à l'âge de l'utilisateur (3) et/ou une restriction physique temporaire de l'utilisateur (3) et/ou une malformation physique de membres de l'utilisateur (3) et/ou un trouble du mouvement de l'utilisateur (3) est pris en compte.

3. Procédé selon la revendication 1 ou 2,
**caractérisé en ce que**
avec le guidage individuel de l'utilisateur généré en fonction de la restriction d'utilisation de l'utilisateur (3) liée à son état physique et/ou de la restriction d'utilisation de l'utilisateur (3) liée à son état mental, au moins une aide à l'actionnement d'un composant fonctionnel (14) est délivrée à l'utilisateur (3) avec l'unité de sortie (6), dans lequel l'au moins une aide à l'actionnement délivrée permet de commander et/ou d'activer le composant fonctionnel (2) par l'utilisateur (3).

4. Procédé selon l'une des revendications précédentes,
**caractérisé en ce que**
avec le guidage individuel de l'utilisateur généré en fonction de la restriction d'utilisation de l'utilisateur (3) liée à son état physique et/ou de la restriction d'utilisation de l'utilisateur (3) liée à son état mental, au moins une instruction est délivrée à l'utilisateur (3) par l'intermédiaire de l'unité de sortie (6), dans lequel le trajet de transport avec le véhicule automobile (4) n'est démarré que lorsque l'au moins une instruction délivrée est exécutée par l'utilisateur (3) avant un démarrage du trajet de transport.

5. Procédé selon l'une des revendications précédentes,
**caractérisé en ce que**
avec le guidage individuel de l'utilisateur généré en fonction de la restriction d'utilisation de l'utilisateur (3) liée à son état physique et/ou de la restriction d'utilisation de l'utilisateur (3) liée à son état mental, au moins une indication concernant une position d'un composant fonctionnel (2) est délivrée à l'utilisateur (3) par l'intermédiaire de l'unité de sortie (6), en particulier le composant fonctionnel (2) est localisé par l'utilisateur (3) à l'aide de l'indication.

6. Procédé selon l'une des revendications précédentes,
**caractérisé en ce que**
avec le guidage individuel de l'utilisateur généré en fonction de la restriction d'utilisation de l'utilisateur (3) liée à son état physique et/ou de la restriction d'utilisation de l'utilisateur (3) liée à son état mental, au moins une information concernant un trajet de transport actuellement effectué avec le véhicule automobile (4) est délivrée à l'utilisateur (3) par l'intermédiaire de l'unité de sortie (6), en particulier, avec l'au moins une information délivrée, une information d'itinéraire et/ou une direction de déplacement du véhicule automobile (4) et/ou une heure d'arrivée à un lieu de destination est mise à disposition de l'utilisateur (3).

7. Procédé selon l'une des revendications précédentes,
**caractérisé en ce que**
lors d'un trajet de transport actuellement effectué par l'utilisateur (3) avec le véhicule automobile (4), un comportement actuel de l'utilisateur (3) est détecté par une unité de détection (15) du véhicule automobile (4) et le comportement actuel détecté est transmis à l'unité de gestion (5), de sorte que le guidage individuel de l'utilisateur est adapté au comportement actuel de l'utilisateur (3), en particulier en fonction d'au moins une caractéristique de l'utilisateur (3) définissant une restriction d'utilisation.

8. Procédé selon l'une des revendications précédentes,
**caractérisé en ce que**
la demande électronique est générée avec un terminal de communication portable (10) de l'utilisateur (3) et/ou avec une installation de traitement de données électronique (11) et/ou par l'intermédiaire d'un portail en ligne (12) et est transmise à l'unité de gestion (5)

9. Procédé selon l'une des revendications précédentes,
**caractérisé en ce que**
l'unité de gestion (5) détermine, en fonction d'au moins le profil d'utilisateur électronique (13), pour quel composant fonctionnel (2) du véhicule automobile (4) un guidage individuel de l'utilisateur est généré.

10. Système électronique de guidage d'utilisateur (1) pour l'utilisation d'un composant fonctionnel (2) par un utilisateur (3) lors d'un trajet de transport avec un véhicule automobile (4) à conduite sans conducteur, comportant une unité de gestion (5), dans lequel le système électronique de guidage d'utilisateur (1) est conçu pour la mise en œuvre d'un procédé selon l'une des revendications précédentes.
